Europäisches Patentamt

European Patent Office

Office européen des brevets

(19)

(11) Numéro de publication: **0 023 549**
**A1**

(12) # DEMANDE DE BREVET EUROPEEN

(21) Numéro de dépôt: **80103265.7**

(22) Date de dépôt: **12.06.80**

(51) Int. Cl.³: **G 01 B 7/00**

(30) Priorité: **13.06.79 FR 7915194**

(43) Date de publication de la demande: **11.02.81**
**Bulletin 81/6**

(84) Etats contractants désignés: **AT BE CH DE GB IT LI LU NL SE**

(71) Demandeur: **SOCIETE D'ETUDES INDUSTRIELLES DE VILLEJUIF, SEIV AUTOMATION Société anonyme dite:, Jules Guesde Zone Industrielle du Bois de l'Epine, F-91130 Ris Orangis par Evry (FR)**

(72) Inventeur: **Huet, Alain, 15, rue Marcel Pagnol, F-78530 Buc (FR)**

(74) Mandataire: **BUREAU D.A. CASALONGA, 8, Avenue Percier, F-75008 Paris (FR)**

(54) **Dispositif de mesure à commande numérique pour des dimensions linéaires.**

(57)    Un palpeur est constitué par un galet de révolution (2) tournant fou autour d'un axe dont la direction correspond à celle d'un axe de coordonnée, que la base supportant cet axe est montée en vue d'un double coulissement (8, 9), selon deux directions perpendiculaires entre elles et perpendiculaires à cet axe et correspondant à deux autres axes de coordonnées, avec un moyen de rappel élastique multidirectionnel (16, 17). L'ensemble du dispositif de rappel élastique multidirectionnel et du double dispositif à coulissement est supporté par un plateau (25) poussé par un ressort axial (26) et reposant par trois billes (27) dans trois rainures radiales dans la tête de palpeur solidaire du support, avec des microrupteurs détectant tout mouvement d'écartement entre ce plateau et cette tête, afin de déclencher l'arrêt de sécurité de la machine.

Dispositif de mesure à commande numérique.

L'invention concerne les dispositifs de mesure à commande numérique, notamment pour la détermination de courbes et surfaces.

On connaît des dispositifs de mesure dans lesquels la pièce à mesurer est disposée sur un marbre tandis qu'un organe de la machine est susceptible de se déplacer selon trois axes de coordonnées rectangulaires par rapport à ce marbre, cet organe servant de support à un palpeur qui est amené en contact avec la pièce à mesurer.

Pour déterminer la cote Z en un point de la pièce défini par deux coordonnées X, Y on amène le support de palpeur hors de la surface de la pièce en un point de coordonnée X, Y et on le déplace axialement dans le sens Z, le palpeur étant fixé sur le support de telle manière que l'organe de palpage soit lui-même mobile dans le sens Z par rapport au support, et l'on poursuit le déplacement jusqu'à ce que le palpeur ait détecté un enfoncement. On obtient alors la cote Z désirée, soit en ramenant l'indication du palpeur à zéro, soit en faisant la différence entre la cote Z du support et la valeur de l'enfoncement détecté par le palpeur. Pour mesurer une courbe on opère ainsi point par point en reculant chaque fois le palpeur et on changeant la valeur d'une des coordonnées X ou Y. Pour mesurer une surface on opère de même mais en faisant varier les deux coordonnées X et Y pour explorer tout en réseau de points. Ce procédé est extrêmement long et ne permet pas de réaliser le réseau de point serré qu'exigerait la précision optimale dans la détermination de la courbe ou de la surface.

Le but de l'invention est d'améliorer considérablement la précision et la rapidité de mesure grâce à un cheminement continu du palpeur sur la pièce.

Pour cela le dispositif de déplacement selon trois axes, constituant la base même de la machine, n'est pas modifié, et seuls sont modifiés le palpeur monté sur le support et le mode d'asservissement des déplacements de la machine.

L'invention consiste donc à adapter sur la machine de type connu assurant un déplacement du support du palpeur, un palpeur présentant les particularités suivantes :

2    0023549

a) son organe de palpage est un disque ou galet de révolution monté pour tourner fou autour d'un axe perpendiculaire au plan de la courbe mesurée ou d'une des courbes de
section de la surface à mesurer;

b) cet axe de galet est monté de manière à pouvoir se
déplacer librement en translation relativement au support dans
deux directions perpendiculaires entre elles et à cet axe et
qui correspondent à deux des directions de déplacement du
support sur la machine, ces deux déplacements relatifs étant
détectés séparément chacun par un capteur de mesure approprié;

c) cet axe de galet est muni d'une moyen de rappel élastique multidirectionnel centripète sensiblement isotrope le
rappelant constamment dans une position centrale moyenne
considérée comme axe du support de palpeur.

Par ailleurs tout l'ensemble précédemment décrit peut
avantageusement être fixé sur un plateau monté par rapport au
support d'une manière géométriquement fixe mais susceptible de
céder en cas de dépassement des efforts permis et d'actionner
dans ce cas un dispositif d'arrêt de la machine.

D'autre part l'invention consiste à doter l'ensemble d'un
calculateur électronique recevant les données des coordonnées
absolues X, Y, Z du support sur la machine, X et Y correspondant aux deux directions de la courbe mesurée, les deux coordonnées relatives x, y de l'axe du palpeur par rapport à l'axe
du support et fournies par les deux capteurs mentionnés plus
haut, et éventuellement le signal d'alarme actionné par le
plateau à déclenchement, et fournissant les commandes voulues
d'asservissement des trois mouvements de déplacement absolus
de la machine et leur arrêt éventuel. Pour cela ce calculateur
effectue les déterminations suivantes :

a) dans le cas d'un point de mesure sur une surface
concave ou convexe il produit le déplacement selon une au
moins des coordonnées X et Y jusqu'à ce que lesdits capteurs
aient détecté un enfoncement à partir de la position zéro. Le
déplacement est alors arrêté et en fonction des valeurs correspondantes X et Y, x et y le calculeur effectue le calcul de
la direction de la normale, de la position du centre du galet et de la position du point de contact à l'intersection de cette normale et du cercle représentant le galet.

b) pour la mesure d'une courbe le calculateur part de trois positions calculées de l'axe du galet pour déterminer par un calcul d'extrapolation une quatrième position probable en fonction d'un pas d'avancement déterminé, de préférence décroissant en même temps que le rayon de courbure, puis porter, à partir de ce point probable dans la direction de la normale déterminée au troisième point et en direction de la pièce, une longueur arbitraire qui est une fraction de latitude déplacement relatif de l'axe du galet par rapport à l'axe du support de palpeur, et enfin commande les déplacements pour amener cet axe de support de palpeur par variation de X et Y à ce point calculé afin de déterminer la position réelle du quatrième centre de galet, le même processus se répètant avec chaque fois les trois dernières positions de ce centre.

c) pour la mesure d'une surface le processus précédent se répète pour diverses valeurs de Z en utilisant dans ce cas de préférence un bord torique à faible rayon pour le galet et en tenant compte de la pente de la surface dans le sens Z pour calculer la cote réelle du point de contact de cette surface torique avec la surface à mesurer.

D'autres particularités de l'invention apparaîtront dans la description qui va suivre d'un mode de réalisation pris comme exemple et représenté sur le dessin annexé sur lequel :

la figure 1 est une coupe verticale partielle du dispositif de palpeur;

la figure 2 est une vue en plan du double dispositif de tables à coulissement;

la figure 3 est une vue de dessus de l'ensemble palpeur;

la figure 4 représente une variante d'utilisation dans le cas où l'axe Z est horizontal;

la figure 5 représente un schéma de principe pour le fonctionnement du calculateur;

la figure 6 est une vue en élévation de l'ensemble précédent utilisé pour la mesure d'une surface gauche en contre-dépouille;

la figure 7 est une vue agrandie d'un fragment de la figure précédente à l'endroit du contact.

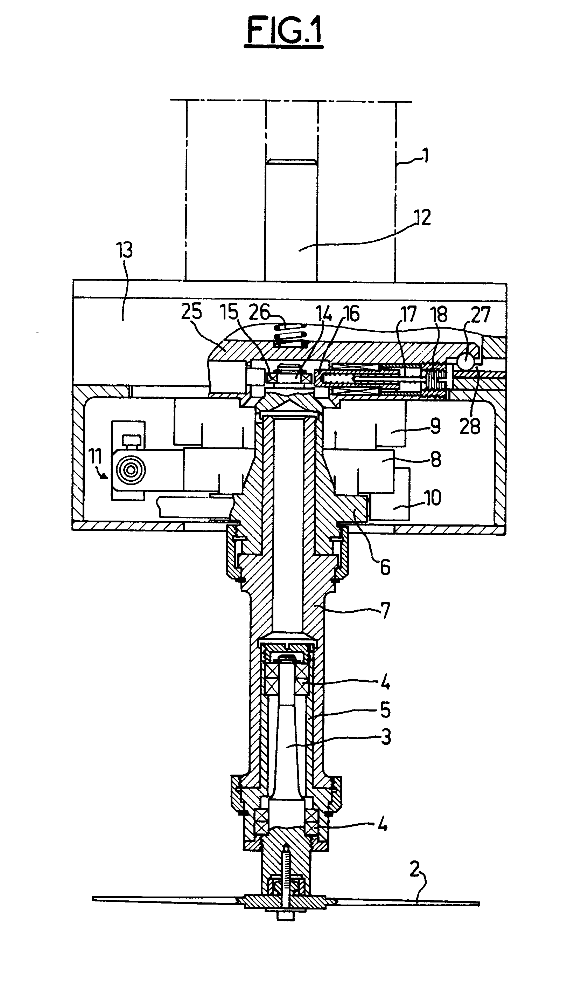

La partie habituelle de la machine, comportant le marbre recevant la pièce et les dispositifs de guidage de déplacement selon les trois axes de coordonnée X et Y et Z du support de palpeur, n'a pas été représentée, et seule l'extrémité inférieure 1 de ce support apparaît sur la figure 1.

Conformément à l'invention l'organe de palpage proprement dit est constitué par un disque 2 ou galet de révolution tournant fou autour de son axe. Ce galet est par exemple fixé à l'extrémité en porte à faux d'une broche 3 tourillonnant librement sur des roulements de précision 4 à l'intérieur d'une douille palier 5. La longueur en porte à faux de l'extrémité inférieure dépassante de la broche 3 peut être plus ou moins importante selon les besoins, de même que le diamètre du galet 2 comme on le verra par la suite, et en outre la douille palier peut être montée directement dans l'alésage d'une base 6 ou indirectement par l'intermédiaire d'un prolongateur 7 visible sur la figure 1.

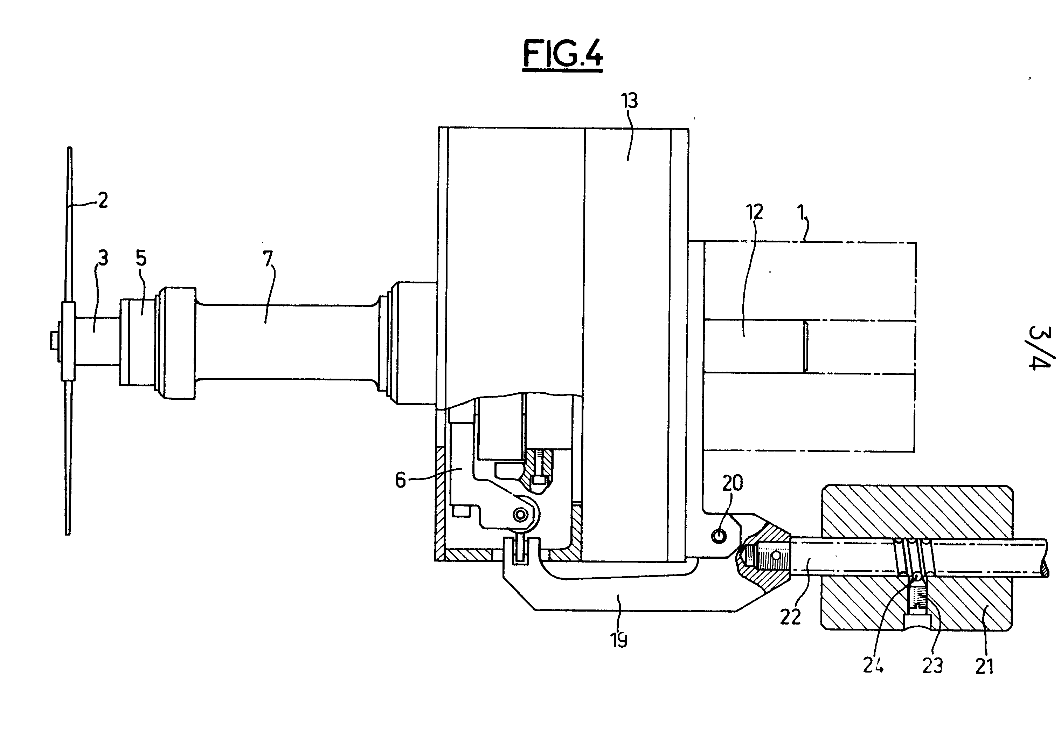

Selon une deuxième particularité de l'invention, cette base 6 est montée sur une première table à coulissement 8 elle-même montée sur une deuxième table à coulissement 9, les directions de coulissement des deux tables étant perpendiculaires entre elles et perpendiculaires à l'axe de la broche 3. L'axe de cette broche correspond à une des trois directions de déplacemeut du support 1, que l'on désignera dans la suite par la direction Z, et en outre les directions de coulissement des deux tables 8 et 9 correspondent respectivement aux directions X et Y. Dans l'exemple choisi sur la figure 1 cet axe Z est supposé vertical, mais dans une variante correspondant à la figure 4 cet axe Z peut également être horizontal. D'autre part chaque table à coulissement 8 et 9 comporte un capteur de déplacement associé, respectivement 10 et 11, détectant respectivement les coordonnées relatives x et y de l'axe du galet par rapport à l'axe de la queue 12 de fixation de la tête de palpeur 13 sur son support 1. L'amplitude du déplacement des tables et des capteurs est naturellement assez réduite, par exemple de l'ordre de plus et moins 7mm.

**0023549**

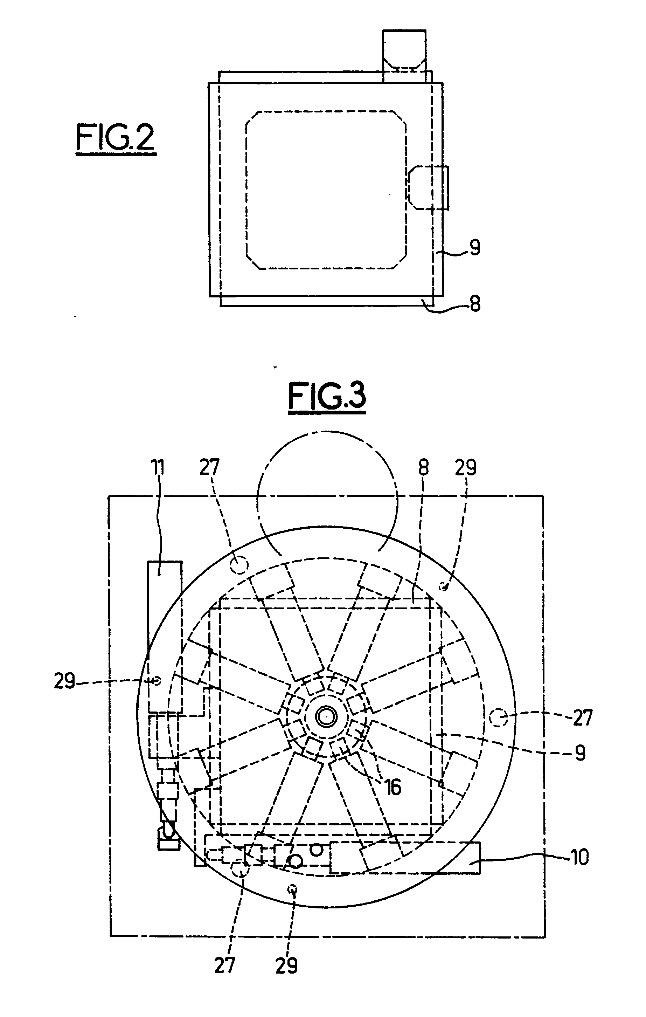

Selon une troisième particularité de l'invention, la base 6 comporte un dispositif de rappel élastique multidirectionnel centripète et sensiblement isotrope. Pour cela on dispose, par exemple à l'extrémité supérieure 14 du prolongement de la base 6 dans lequel se centre la douille 5 ou la partie correspondante du prolongateur 7, un roulement 15 sur lequel agissent un certain nombre de poussoirs à ressorts 16, par exemple au nombre de huit répartis tout autour de l'axe comme représenté sur la figure 3, chacun de ces poussoirs coulissant dans le sens radial en étant poussé toujours vers le centre par un ressort 17 avec une vis de réglage 18. L'ensemble est ainsi réglé est équilibré pour que l'axe des galets 2 coïncide au repos avec une position fixe que l'on supposera être l'axe de la queue 12.

Dans le cas où le palpeur est utilisé avec son axe non vertical, par exemple horizontal comme dans l'exemple représenté sur la figure 4, il est nécessaire en outre de prévoir une compensation du poids de la partie mobile, ce qui est obtenu simplement au moyen d'un fléau 19 articulé en 20 sur la tête de palpeur 13 et comportant un poids 21 réglable en position le long de la partie filetée 22 prolongeant le fléau 19 vers l'arrière, avec blocage par une vis 23 agissant sur une bille 24 qui fait fonction d'écrou. L'ensemble, d'abord équilibré en position verticale par action sur les vis 18, est ensuite placé à l'horizontale et équilibré à nouveau par réglage du poids 21.

A titre de perfectionnement l'ensemble de la table de base 9 ainsi que des supports des poussoirs à ressorts 16 n'est pas fixé directement sur la tête de palpeur 13 mais se trouve fixé sur un plateau 25 qui est poussé par un ressort axial 26 en appui contre la tête 13, cet appui se faisant par l'intermédiaire de trois billes 27 réparties à 120° au bord de la face inférieure du plateau et s'appuyant chacune dans une rainure radiale 28 par exemple en V. Ce dispositif assure donc une immobilisation précise du plateau par rapport à la tête 13 tout en permettant un déboîtement en cas d'effort excessif aussi bien axial que transversal. En outre trois microcon- tacts, désignés par 29 sur la figure 3 et intercalés entre les billes 27, détectent tout écartement entre le plateau 25 et la tête 13 afin d'arrêter la machine dans le cas où le dispositif supporterait un effort anormal.

Par ailleurs, selon l'invention, l'ensemble qui comprend la machine usuelle à déplacements X, Y, Z et le palpeur qui vient d'être décrit, se complète par une électronique associée permettant d'assurer, en fonction des résultats recherchés, la commande des déplacements X, Y et Z et l'affichage du résultat voulu, en fonction des informations numériques provenant des capteurs de déplacement X, Y et Z de la machine et x, y du palpeur.

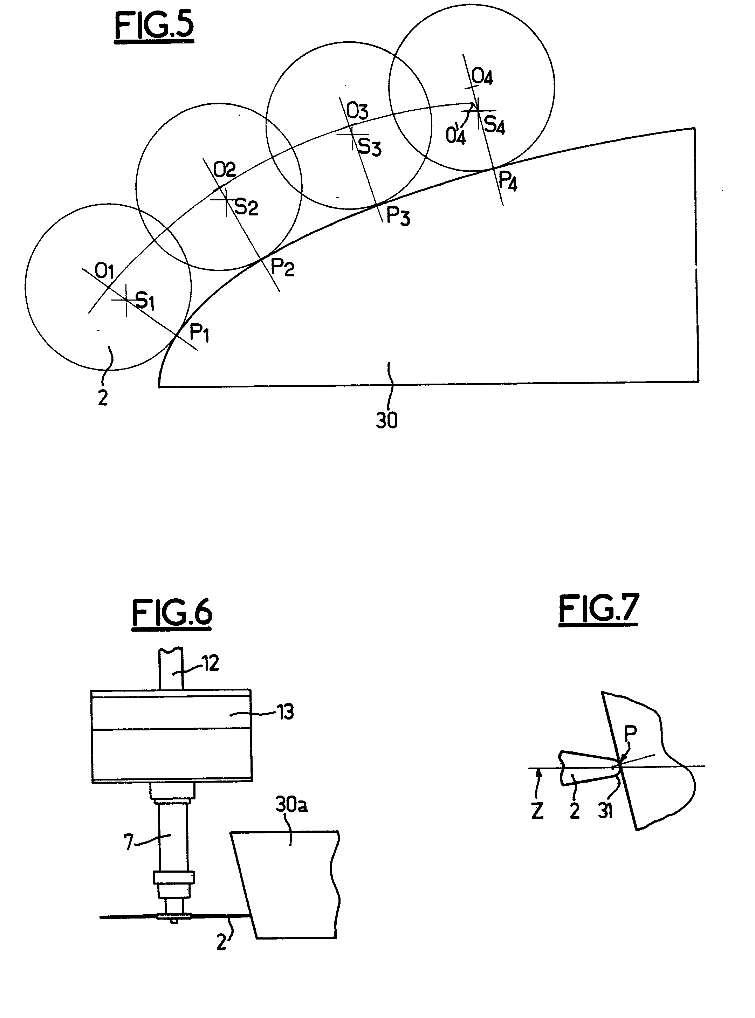

Pour mesurer un point quelconque 31 d'une pièce 30 (voir figure 5) à simple ou double courbure, convexe ou concave, on déplace le support 1 selon Z jusqu'à ce que le galet 2 soit au niveau du point P1, puis dans le plan X, Y (qui est le plan de la figure 5) on déplace ce support, matérialisé sur la figure 5 par le point S1 représentant la projection de l'axe du support 1 ou de la queue 12 de la tête 13 montée dans ce support, et ceci en direction de P1 jusqu'à ce que les capteurs 10 et 11 ou l'un au moins d'entre eux accusent des valeurs différentes de zéro pour x et y. Les coordonnées de S1 sont à cet instant X, Y et Z. On peut alors arrêter le déplacement et déduire la position du point P1 par le calcul. En effet le montage fou de l'axe 3 permet de supposer qu'il n'existe aucun couple sur le galet 2 et que par conséquent la force de réaction de la pièce 30 en P1 sur le galet 2 s'exerce radialement selon P1O1 représente la projection de l'axe 3 pour cette position du galet. D'autre part grâce au rappel élastique centripète on peut affirmer que l'effort élastique imprimé par le dispositif sur l'axe O1 est radial par rapport à S1, c'est-à-dire dirigé selon O1S1 et cette force équilibre la force de réaction précédente.

A partir de X, Y, coordonnées absolues de S1 et x, y, coordonnées relatives de O1 par rapport S1 on en déduit facilement les coordonnées absolues de O1 qui sont respectivement X + x et Y + y. Pour obtenir les coordonnées P1 il suffit donc, à partir des coordonnées de 01 de porter un vecteur 01P1 de module connu, égal au rayon du galet, et dans la direction connue dont les coefficients directeurs sont respectivement -x et -y rapportés au module de S101, c'est-à-dire $\sqrt{x^2 + y^2}$. Le calculateur associé à la machine peut donc afficher directement les trois coordonnées du point P1.

Dans le cas où l'on veut mesurer une courbe, définie par exemple par une surface cylindrique à génératrices parallèles à l'axe Z, on peut opérer point par point en utilisant la méthode précédente, mais il est plus rapide et plus précis d'opérer de la manière suivante :

Après s'être positionné en Z on déplace le support successivement en trois positions S1, S2 et S3, en réalité très voisines, selon un certain pas de progression et ceci par une commande manuelle. Pour chacune de ces positions on détermine comme précédemment les coordonnées absolues des positions 01, 02 et 03 qu'occupe successivement l'axe 3 du galet 2; ces trois renseignements donnent alors la direction à suivre ainsi que la courbure de la surface et permettent de calculer la position probable 0'4 du centre suivant. Pour cela on détermine d'une part une courbe d'extrapolation passant par les points 01, 02, 03, par exemple un cercle ou une conique, ou encore une cubique en imposant la direction de la tangente en 01 qui au départ est calculée comme perpendiculaire à la normale définie comme précédemment, puis pour les points suivants est calculée comme tangente à la courbe d'extrapolation précédente. Sur la courbe ainsi définie on choisit d'autre part le point 0'4 de telle manière que le pas d'avancement 03, 0'4 corresponde à une valeur arbitraire, mais de préférence décroissante avec le rayon de courbure pour assurer une meilleure définition dans les parties très courbes de la pièce 30.

A partir du point 0'4 ainsi calculé on porte un segment de droite 0'4S4 dont la direction est prise parallèle à la normale 03P3 à la courbe d'extrapolation et dans le sens indiqué, et dont la longueur correspond à une valeur standard qui est une fraction de la marge de débattement des tables coulissantes 8 et 9. Par exemple dans l'exemple choisi, où ce débattement est de l'ordre de plus et moins 7mm, cette valeur standard peut être égale à 2mm.

Ayant déterminé les coordonnées du point S4 on les transmet à la commande de déplacement X et Y pour amener le support en ce point et l'on détermine comme précédemment la position réelle du point O4. Celui-ci peut être plus éloigné de la surface de la pièce 30 que le point O'4 prévu, comme dans l'exemple représenté sur la figure 5, ou au contraire être plus proche de cette surface, c'est-à-dire compris entre O'4 et S4. La valeur standard de rapprochement O'4S4 indiquée précédemment a précisémment pour effet dans ce cas d'éviter la perte du contact entre le galet et la pièce. En d'autres termes la compression réelle du dispositif élastique multidirectionnel est en pratique plus grande ou plus petite selon les cas que la valeur standard de rapprochement imposée mais toujours de même sens ce qui permet d'éviter la perte du contact, précisémment grâce à la faiblesse du pas d'avancement et en outre à la réduction de ce pas lorsque le rayon de courbure décroît comme indiqué précédement, ce qui constitue une sécurité supplémentaire.

A partir de ce moment-là, le calculateur prend en compte les coordonnées de O4 ou de P4 calculées et les enregistre ou les utilise aux fins de comparaison. Ensuite le calculateur part des coordonnées des points O2, O3 et O4 pour opérer de la même façon avec la position suivante O5 et ainsi de suite.

En définitive le galet ne quitte donc jamais la surface à mesurer et se déplace en roulant continuellement le long de cette surface par un asservisseement quasi continu, les intervalles de temps correspondant aux divers pas d'avancement n'étant en fait limités que par la rapidité des calculs et non par des déplacements mécaniques. Il en résulte la possibilité d'explorer avec une extrême précision une surface donnée dans un temps réduit avec un nombre de points mesurés beaucoup plus élevé qu'avec les dispositifs habituels. On arrive par exemple facilement à obtenir 9 à 10 000 points par heure alors qu'avec les dispositifs habituels on dépasse rarement 1 000 dans des conditions exceptionnelles.

Dans le cas où l'on désire mesurer une surface quelconque on opère comme précédemment pour des valeurs successives de la cote Z. Dans ce cas, et en particulier si la pièce 30a présente une surface en contre-dépouille comme illustré sur la figure 6, il est important pour éviter la rencontre entre la pièce 30a et la tête de palpeur 13 que le galet 2 ait un diamètre suffisant et que la tige 3 ou le prolongateur 7 ait une longueur suffisante. Par ailleurs conformément à l'invention, le bord extrême du galet, comme il apparaît sur la vue grossie de la figure 7, a de préférence un profil torique 31 à rayon faible mais parfaitement défini plutôt qu'une partie tranchante imprécise et soumise à dégradation. La valeur du rayon de cette partie torique est alors prise en compte dans le calculateur qui, pour chaque point de contact P mesuré a une cote approximative Z, puise dans sa mémoire les valeurs des coordonnées du point homologue au niveau précédent pour calculer la pente par rapport à l'axe Z de la génératrice de la surface s'il y a lieu, ou de la tangente à cette surface, afin de calculer la correction à apporter à Z pour avoir la position réelle selon Z du point P de contact entre cette droite et le tore 31. Il s'agit naturellement dans ce cas d'une très faible correction mais qui peut cependant n'être pas négligeable compte tenu de la précision de l'appareil.

Naturellement dans le cas d'une exploration de surface, par courbes de niveau successives, la rapidité de la mesure est encore plus importante que dans le cas précédent.

Tout ce qui précède suppose connue la position de la pièce par rapport au marbre, la cote absolue Z variable et la cote relative z constante du galet par rapport au support. Pour éviter la détermination de toutes ces cotes, l'empilement des tolérances et les problèmes habituels de détermination du zéro il est prévu selon l'invention d'opérer comme suit :

On utilise une sphère de référence de diamètre précis et connu reliée à la pièce mesurée à une cote Z précise et connue par rapport au plan de référence de la pièce.

Avant chaque mesure, ou série de mesures opérées comme exposé plus haut, ou après chaque changement de galet éventuel, on amène le palpeur à une cote arbitraire correspondant à un petit cercle dans l'hémisphère supérieur de la sphère (en supposant l'axe des Z vertical) et on mesure plusieurs points de cette sphère, puis on **amène le palpeur** à une autre cote arbitraire correspondant à un petit cercle de l'hémisphère inférieur et on mesure à nouveau plusieurs points de ce cercle. Le calcul permet alors de déterminer avec précision le décalage du zéro, c'est-à-dire de situer exactement chaque cote Z ultérieur du palpeur par rapport au plan de référence en éliminant toutes les autres inconnues. Naturellement, les calculs correspondant sont effectués automatiquement par le calculateur de la machine.

Les applications de ce dispositif sont innombrables. En particulier en partant d'une pièce modèle type, on peut déterminer et enregistrer en mémoire les cotes et les coordonnées des divers points en vue par exemple de commander une machine d'usinage numérique réalisant des pièces conformes à la pièce type. Inversement la même machine permet sur une pièce nouvellement effectuée de vérifier l'exactitude des cotes et coordonnées des divers points en les comparant aux coordonnées fournies soit par une définition mathématique de la surface, soit par un enregistrement préalable sur une pièce type obtenu comme il vient d'être exposé.

0023549

## REVENDICATIONS

1. Machine de mesure à commande numérique du type comportant un marbre recevant la pièce à mesurer et un palpeur porté par un support susceptible de se déplacer par rapport au marbre selon les trois axes de coordonnées avec repérage de celles-ci et une électronique de commande associée à la machine, machine dans laquelle l'organe palpeur est constitué par un galet de révolution tournant fou autour d'un axe dont la direction correspond à celle d'un des axes de coordonnée, la base supportant cet axe est montée en vue d'un double coulissement selon deux directions perpendiculaires entre elles et perpendiculaires à cet axe et correspondant aux deux autres axes de coordonnées, avec un moyen de rappel élastique multidirectionnel et de préférence isotrope rappelant cet axe vers une position fixe considérée comme l'axe du support, et deux capteurs de mesure associés respectivement aux deux coulissements permettent de déterminer les mesures algébriques des deux coordonnées relatives de l'écart entre l'axe et ladite position fixe, enfin l'électronique associée à la machine constitue un calculateur qui reçoit les valeurs des trois coordonnées absolues du support et des deux coordonnées relatives fournies par lesdits capteurs et détermine par le calcul les caractéristiques des points de contact, courbes ou surfaces à mesurer tout en asservissant les déplacements dudit support selon les axes de coordonnées, machine caractérisée par le fait que l'ensemble du dispositif de rappel élastique multidirectionnel et du double dispositif à coulissement est supporté par un plateau poussé par un ressort axial et reposant par trois billes dans trois rainures radiales dans la tête de palpeur solidaire du support, avec des microrupteurs détectant tout mouvement d'écartement entre ce plateau et cette tête, afin de déclencher l'arrêt de sécurité de la machine.

2. Machine selon la revendication 1, dans laquelle le galet palpeur est constitué par des disques interchangeables, caractérisée par le fait que chacun de ces disques possède un profil extérieur torique d'un rayon précis.

3. Machine selon l'une quelconque des revendications précédentes, caractérisée par le fait que le galet de palpage est
monté en porte à faux dans une douille palier susceptible de
recevoir elle-même un prolongateur.

4. Machine selon l'une quelconque des revendications
précédentes, caractérisée par le fait qu'elle comporte un
contrepoids d'équilibrage exerçant dans le plan du dispositif
à double coulissement un effort ascendant contrebalançant le
poids des parties mobiles pour les utilisations avec l'axe du
galet dans une direction autre que verticale.

5. Machine selon l'une quelconque des revendications
précédentes, caractérisée par le fait que, pour la détermination des coordonnées d'un point isolé, le calculateur part
des coordonnées rectangulaires absolues du support et des
coordonnées rectangulaires relatives de l'axe du galet pour
déterminer les coordonnées absolues de cet axe et également la
direction et par suite les coordonnées du point de contact du
galet avec la surface.

6. Machine selon l'une quelconque des revendications précédentes, caractérisée par le fait que pour l'exploration
d'une courbe orientée selon le plan de deux des axes de coordonnées, le calculateur part de la position calculée de trois
centres de galets successifs pour déterminer par le calcul la
position suivante la plus probable avec un pas d'écartement
décroissant en même temps que le rayon de courbure de la
courbe, et détermine les nouvelles coordonnées à imposer au
support en se rapprochant à partir de cette position la plus
probable d'une cote standard en direction de la normale à la
courbe décrite par le centre du galet à la position du point
précédent, ladite valeur standard étant choisie comme une
fraction du déplacement maximum des dispositifs à coulissement
à partir de la position fixe, enfin après avoir reçu les
informations relatives à la nouvelle position du palpeur et
calculé les nouvelles coordonnées de son centre, il réitère
l'opération chaque fois avec les trois derniers centres.

7. Machine selon les revendications 2 et 6 prises dans
leur ensemble, caractérisée par le fait que pour explorer une

0023549

surface le calculateur répète l'exploration d'une courbe pour des valeurs successives de la troisième coordonnée en calculant dans chaque cas la correction de cote à apporter dans le sens de cette troisième coordonnée en fonction du rayon de courbure connu de la partie torique du galet et de l'inclinaison de la surface au point considéré par rapport à l'axe de la troisième coordonnée, inclinaison calculée en fonction des cotes des points homologues obtenues dans les explorations des niveaux précédents.

8. Machine selon l'une quelconque des revendications 5 à 7, caractérisée par le fait que son calculateur comporte un programme d'étalonnage préalable pour la détermination du zéro de la cote Z à partir de mesures effectuées par le palpeur sur plusieurs points de deux petits cercles situés respectivement dans des hémisphères opposés d'une sphère de référence d'un diamètre précis et connu située à une cote précise et connue dans le sens des Z par rapport au plan de référence de la pièce mesurée.

0023549

# FIG.1

FIG.2

FIG.3

FIG.4

0023549

## FIG.5

## FIG.6

## FIG.7

Office européen
des brevets

**RAPPORT DE RECHERCHE EUROPEENNE**

0023549

Numéro de la demande

EP 80 10 3265

| Catégorie | Citation du document avec indication, en cas de besoin, des parties pertinentes | Revendication concernée |
|---|---|---|
| | GB - A - 1 447 613 (ROLLS-ROYCE)<br><br>  * Figures 1 et 2; page 1, ligne 57 - page 2, ligne 19 * | 1 |
| | GB - A - 2 005 022 (MESELTRON)<br><br>  * Figures 1-3; page 2, lignes 37 -44; 86-99 * | 1 |
| | GB - A - 1 410 710 (INDUSTRIE PIRELLI)<br><br>  * Page 2, lignes 5-12 * | 2,3 |
| | US - A - 3 845 561 (ELSDOERFER)<br><br>  * Figures 2 et 3 * | 3 |
| | US - A - 3 766 653 (McKAY SR.)<br><br>  * Colonne 3, lignes 1-13 * | 4 |
| | DE - A - 2 654 839 (JENOPTIK)<br><br>  * Figure 1; page 18 * | 5 |
| A | US - A - 3 922 791 (MAXEY SR et al.)<br><br>  * Figure 4; colonne 6, ligne 54 - colonne 7, ligne 18; colonne 10, lignes 13-23 * | 1 |

./

**DOCUMENTS CONSIDERES COMME PERTINENTS**

**CLASSEMENT DE LA DEMANDE** (Int. Cl. 3)

G 01 B 7/00

**DOMAINES TECHNIQUES RECHERCHES** (Int. Cl. 3)

G 01 B  7/00
           5/00
B 23 Q 35/28
          35/30
          35/32
          35/34

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 28-08-1980 | IVES |

OEB Form 1503.1  06.78

**Office européen
des brevets**

**RAPPORT DE RECHERCHE EUROPEENNE**

0023549

Numéro de la demande

EP 80 10 3265

-2-

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| A | <u>DE - A - 2 353 249</u> (VEREINIGTE FLUGTECHNISCHE WERKE)<br><br>  * Page 5, ligne 23 - page 7, ligne 19 *<br><br>        ---- | 1 | |
| | | | **DOMAINES TECHNIQUES RECHERCHES (Int. Cl. ³)** |